# EUROPEAN PATENT APPLICATION

(11) **EP 4 797 197 A1**
(43) Date of publication of application: **26.08.2026**
(21) Application number: 24924236.3
(22) Date of filing: 05.12.2024
(51) Int. Cl.: G06T 1/60

(54) **STORAGE SPACE ALLOCATION METHOD AND APPARATUS, ELECTRONIC DEVICE, STORAGE MEDIUM, AND PRODUCT**

(71) Applicant: VeriSilicon Microelectronics (Shanghai) Co., Ltd., Shanghai 201203 (CN)
(72) Inventor: HUANG, Lijie, Shanghai 201203 (CN); PEI, Hongzhe, Shanghai 201203 (CN); WU, Jianbing, Shanghai 201203 (CN); LU, Rong, Shanghai 201203 (CN); ZHANG, Huiming, Shanghai 201203 (CN); QIN, Kui, Shanghai 201203 (CN); ZHANG, Qin, Shanghai 201203 (CN); MENG, Yue, Shanghai 201203 (CN); JIANG, Fulong, Shanghai 201203 (CN); WANG, Chao, Shanghai 201203 (CN)
(74) Representative: Bryn Aarflot AS
(86) International application number: PCT/CN2024/137215
(87) International publication number: WO 2026/118028

(57) **Abstract**

The present invention relates to a storage-space allocation method and apparatus, an electronic device, a computer-readable storage medium and a computer program product, pertaining to the field of electronic technology. The storage-space allocation method includes: acquiring an allocation request from a target object, wherein the allocation request is configured to apply for an OCAB storage space; verifying whether a remaining OCAB storage space is larger than or equal to the OCAB storage space applied for by the allocation request; and allocating, if the remaining OCAB storage space is smaller than the OCAB storage space applied for by the allocation request, the target object a GMAB storage space based on the allocation request, wherein the access speed of the OCAB storage space is higher than or equal to the access speed of the GMAB storage space.

## Description

### TECHNICAL FIELD

The present invention relates to the field of electronic technology, and specifically to a storage-space allocation method and apparatus, an electronic device, a computer-readable storage medium and a computer program product.

### BACKGROUND ART

In computer graphics, when shading any point within a primitive, attribute values of this point are required. The attribute values are usually stored in external memory, and transmitting the data to a graphics processing unit (GPU) consumes a lot of bandwidth and time. Storing the attribute values in an on-chip attribute buffer (OCAB) of the GPU facilitates access by computing units and improves access speed and efficiency. Before performing shading calculations, it is necessary to allocate a part of OCAB storage space to store the attribute values.

In the prior art, a process of allocating the OCAB storage space is as follows: upon receipt of an allocation request for the storage space, firstly verifying remaining available OCAB space, if the remaining available OCAB space is sufficient, allocating the OCAB storage space based on the allocation request; if not, entering a blocked state, and pushing the allocation request into a waiting queue for orderly processing. When a previously allocated storage space is released, relevant resource manager updates states and notifies the allocation request in the top of the waiting queue. After each release operation, the remaining available OCAB space is recalculated and compared with the storage space applied for by the pending allocation request. Once the remaining available OCAB space is larger than or equal to the storage space requested, the requested storage space is allocated to the blocked allocation request, the state is updated to unblock, and the previously blocked allocation request is allowed to continue execution.

In the allocation process of the OCAB storage space in the prior art, when the remaining OCAB space is insufficient, it will cause an allocation pipeline to stall, and may degrade overall performance. Moreover, the prior art has the possibility of deadlock during out-of-order execution. For example, consider a case where two sets of draw call are input sequentially, and each set of draw call includes vertex shader (VS) and geometry shader (GS). When the VS in the second set of draw occupies the entire OCAB, on one hand, as the shading requires order preservation, that is, an input shading order and an output shading order are consistent, the VS in the second set of draw cannot be output before the GS in the first set of draw, resulting in persistent occupation of the OCAB; on the other hand, the GS in the first set of draw fails to be allocated sufficient OCAB in this case, causing it to remain blocked and unable to enter the pipeline, consequently leading to deadlock.

### SUMMARY

Embodiments of the present invention aim at providing a storage-space allocation method and apparatus, an electronic device, a computer-readable storage medium and a computer program product, so as to overcome the limitations existing in the OCAB storage-space allocation method in the prior art.

Embodiments of the present invention are implemented as follows.

In the first aspect, embodiments of the present invention provide a storage-space allocation method, including: acquiring an allocation request from a target object, where the allocation request is configured to apply for an OCAB storage space; verifying whether a remaining OCAB storage space is larger than or equal to the OCAB storage space applied for by the allocation request; and allocating, if the remaining OCAB storage space is smaller than the OCAB storage space applied for by the allocation request, the target object a global memory attribute buffer (GMAB) storage space based on the allocation request, where the access speed of the OCAB storage space is higher than or equal to the access speed of the GMAB storage space.

In the above embodiments, by introducing the GMAB storage space, when the remaining OCAB space is insufficient, the GMAB storage space is utilized for buffer adjustment, thus reducing possibilities of allocation pipeline stalls, further improving overall performance, and overcoming the limitations existing in the OCAB storage-space allocation method in the prior art.

In a possible embodiment in combination with embodiments in the first aspect, prior to verifying whether a remaining OCAB storage space is larger than or equal to the OCAB storage space applied for by the allocation request, the method further includes: verifying an allocation permission of the target object for the OCAB storage space; and determining that the target object possesses the allocation permission for the OCAB storage space.

In the above embodiments, prior to verifying whether the remaining OCAB storage space is larger than or equal to the OCAB storage space applied for by the allocation request, the allocation permission of the target object for the OCAB storage space is firstly verified, and only when the target object possesses the allocation permission, whether the remaining OCAB storage space is larger than or equal to the OCAB storage space applied for by the allocation request is verified, and in this way, the storage space allocation performance can be elevated by adjusting permission parameters, and flexibility of the solution is enhanced.

In a possible embodiment in combination with embodiments in the first aspect, the method further includes: if the target object lacks the allocation permission for the OCAB storage space, allocating the target object the GMAB storage space based on the allocation request.

In the above embodiments, if the target object lacks the allocation permission for the OCAB storage space, the target object is allocated the GMAB storage space based on the allocation request, and the GMAB storage space is used to replace the OCAB storage space, which can ensure unblocking of the whole pipeline, thereby further improving the performance.

In a possible embodiment in combination with embodiments in the first aspect, the step of verifying an allocation permission of the target object for the OCAB storage space includes: performing at least one of the following verifications: verifying whether the OCAB storage space applied for by the allocation request exceeds a single maximum request limit; and verifying whether the currently used OCAB storage space when the target object applies for exceeds a maximum upper limit, where when each verification in the at least one verification returns a negative result, it is determined that the target object possesses the allocation permission for the OCAB storage space.

In the above embodiments, by verifying whether target object has the allocation permission for the OCAB storage space by the above verification method, flexible spill check can be implemented by configuring the single maximum request limit and maximum upper limit.

In a possible embodiment in combination with embodiments in the first aspect, prior to allocating the target object the GMAB storage space based on the allocation request, the method further includes: if the remaining OCAB storage space is smaller than the OCAB storage space applied for by the allocation request, initiating a timing phase; if a timing duration exceeds a target duration, re-verifying whether the remaining OCAB storage space is larger than or equal to the OCAB storage space applied for by the allocation request; and determining that the remaining OCAB storage space re-verified is still smaller than the OCAB storage space applied for by the allocation request.

In the above embodiments, when the remaining OCAB storage space is smaller than the OCAB storage space applied for by the allocation request, by waiting for a certain time, if, in the timing phase, it is possible that the previously allocated OCAB storage space is released, then after the release, the remaining OCAB storage space available for allocation may become larger than or equal to the OCAB storage space applied for by the allocation request, in which case the OCAB storage space can be immediately allocated to the target object, in this way, allocation of the OCAB storage space to the target object is prioritized. As the access speed of the OCAB storage space is higher than or equal to that of the GMAB storage space, the data access efficiency can be elevated as much as possible.

In a possible embodiment in combination with embodiments in the first aspect, the method further includes: if the remaining OCAB storage space re-verified is larger than or equal to the OCAB storage space applied for by the allocation request, allocating the target object the OCAB storage space based on the allocation request.

In the above embodiments, if the remaining OCAB storage space re-verified is larger than or equal to the OCAB storage space applied for by the allocation request, the target object is immediately allocated the OCAB storage space based on the allocation request. The allocation of the OCAB storage space to the target object is prioritized, because the access speed of the OCAB storage space is higher than or equal to that of the GMAB storage space, and in this way the data access efficiency can be elevated as much as possible.

In a possible embodiment in combination with embodiments in the first aspect, the method further includes: if the remaining OCAB storage space is larger than or equal to the OCAB storage space applied for by the allocation request, allocating the target object the OCAB storage space based on the allocation request.

In the above embodiments, if the remaining OCAB storage space verified is larger than or equal to the OCAB storage space applied for by the allocation request, the target object is immediately allocated the OCAB storage space based on the allocation request. The allocation of the OCAB storage space to the target object should be prioritized, as the access speed of the OCAB storage space is higher than or equal to that of the GMAB storage space, thus maximizing the data access efficiency.

In a possible embodiment in combination with embodiments in the first aspect, prior to allocating the target object the GMAB storage space based on the allocation request, the method further includes: verifying whether the remaining GMAB storage space is larger than or equal to the OCAB storage space applied for by the allocation request; and determining that the remaining GMAB storage space is larger than or equal to the OCAB storage space applied for by the allocation request.

In the above embodiments, prior to allocating the target object the GMAB storage space based on the allocation request, whether the remaining GMAB storage space is larger than or equal to the OCAB storage space applied for by the allocation request is verified first, and only when it is determined that the remaining GMAB storage space is larger than or equal to the OCAB storage space applied for by the allocation request, the remaining GMAB storage space can be allocated, so that when setting the allocable GMAB storage space, it is unnecessary to set a larger GMAB storage space, thus reducing area overhead.

In a possible embodiment in combination with embodiments in the first aspect, the GMAB storage space allocated to the target object includes L1 cache; and after allocating the target object the GMAB storage space of L1 cache based on the allocation request, the method further includes: setting eviction priority of data in each cache line in the GMAB storage space allocated to the target object to be the lowest eviction priority.

In the above embodiments, when the GMAB storage space allocated to the target object includes L1 cache, the eviction priority of data in each cache line in the GMAB storage space allocated to the target object is set to be the lowest eviction priority, so as to reduce possibility of eviction, thus fully utilizing the L1 cache, minimizing data access latency for computing units, and enhancing overall performance.

In the second aspect, embodiments of the present invention provide a storage-space allocation apparatus, including: an acquisition module, a verification module and an allocation module, where the acquisition module is configured to acquire an allocation request from a target object, where the allocation request is configured to apply for an OCAB storage space; the verification module is configured to verify whether a remaining OCAB storage space is larger than or equal to the OCAB storage space applied for by the allocation request; and the allocation module is configured to allocate, if the remaining OCAB storage space is smaller than the OCAB storage space applied for by the allocation request, the target object a GMAB storage space based on the allocation request, where the access speed of the OCAB storage space is higher than or equal to the access speed of the GMAB storage space.

In the third aspect, embodiments of the present invention provide an electronic device, including: a memory and a processor, where the processor is connected to the memory; the memory is configured to store a program; and the processor is configured to call the program stored in the memory, so as to execute the storage-space allocation method according to any possible embodiment in the first aspect.

In the fourth aspect, embodiments of the present invention provide a computer-readable storage medium, where the computer-readable storage medium stores a computer program, and when the computer program is run by a computer, the storage-space allocation method according to any possible embodiment in the first aspect is executed.

In the fifth aspect, embodiments of the present invention provide a computer program product, where the computer program product includes a computer program, and when the computer program is executed by a computer, the storage-space allocation method according to any possible embodiment in the first aspect is executed.

In the above, the technical effects that can be achieved by the second to fifth aspects can be referred to corresponding technical effects in the first aspect, and will not be repeated herein.

### BRIEF DESCRIPTION OF DRAWINGS

In order to more clearly illustrate technical solutions of embodiments of the present invention, drawings that need to be used in the embodiments of the present invention will be briefly introduced below. It should be understood that the drawings only show some embodiments of the present invention, and thus should not be regarded as limitation to the scope. Those ordinary skilled in the art could also obtain other relevant drawings based on these drawings without using any inventive efforts.
FIG. 1 is a flowchart of a first storage-space allocation method provided in embodiments of the present invention;
FIG. 2 is a flowchart of a second storage-space allocation method provided in embodiments of the present invention;
FIG. 3 is a flowchart of a third storage-space allocation method provided in embodiments of the present invention;
FIG. 4 is a flowchart of a fourth storage-space allocation method provided in embodiments of the present invention;
FIG. 5 is a flowchart of a fifth storage-space allocation method provided in embodiments of the present invention;
FIG. 6 is a flowchart of a sixth storage-space allocation method provided in embodiments of the present invention;
FIG. 7 is a structural diagram of a storage-space allocation apparatus provided in embodiments of the present invention; and
FIG. 8 is a structural schematic diagram of an electronic device provided in embodiments of the present invention.

### DETAILED DESCRIPTION OF EMBODIMENTS

Technical solutions in embodiments of the present invention will be described below with reference to drawings in the embodiments of the present invention. Apparently, only some but not all embodiments of the present invention are described. The following embodiments can be used as examples for illustrating the technical solutions of the present invention more clearly, but are not intended to limit the scope of protection of the present invention. Those skilled in the art could understand that the following embodiments and features in the embodiments can be combined with each other without conflict.

It should be noted that like reference signs and letters represent like items in the following drawings, and thus, once a certain item is defined in one drawing, it is unnecessary to further define and explain the same in subsequent drawings. Meanwhile, in the description of the present invention, relational terms such as "first" and "second" in the description of the present invention are merely for distinguishing one entity or operation from another entity or operation, while it is not necessarily required or implied that these entities or operations have any actual such relation or order therebetween. Moreover, the terms "comprise", "include" or any other variations are intended to encompass non-exclusive inclusion, so that a process, method, article or device that includes a series of elements not only includes those elements, but also includes other elements that are not explicitly listed, or elements that are inherent to such process, method, article or device.

Moreover, the term "and/or" in the present invention is merely for describing an association relationship between associated objects, indicating that there may be three relationships, for example, "A and/or B" may indicate three situations, namely, A exists alone, both A and B exist, and B exists alone.

In the description of embodiments of the present invention, unless otherwise specified and defined, technical terms "connect" may indicate a fixed connection, or indirect connection by an intermediary.

Embodiments of the present invention provide a storage-space allocation method. This allocation method allocates a GMAB storage space to a target object when a remaining OCAB space is insufficient, so as to reduce allocation pipeline stalls and overall chip performance degradation, and also avoid the issue of deadlock during out-of-order execution.

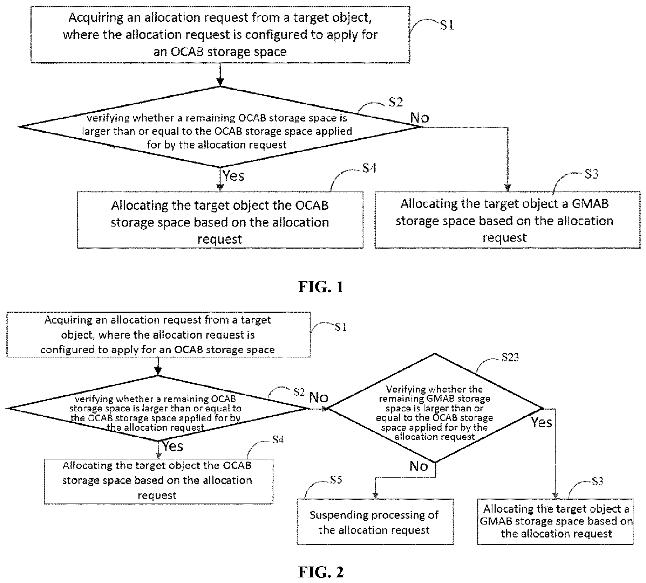

The storage-space allocation method provided in embodiments of the present invention will be described below in conjunction with FIG. 1. The storage-space allocation method provided in the present invention can be applied to a processor in an electronic device. For example, in an embodiment, the method can be applied in a GPU (graphics processing unit), and can allocate a storage space of a shader in the GPU.

S1: acquiring an allocation request from a target object, where the allocation request is configured to apply for an OCAB storage space.

The allocation request from the target object (e.g., client, representing a shader type) is acquired, where the allocation request is configured to apply for an OCAB storage space. The target object may be a shader, for example, a vertex shader, a geometry shader, and/or a pixel shader. The shader will use a variety of data during execution. For example, when shading any point within a primitive, attribute values of this point are required. In order to elevate data access speed and efficiency, the shader needs to be allocated the storage space so as to store the data. For example, the shader can be allocated the OCAB storage space to store the attribute values.

The target object can initiate the allocation request to a relevant resource manager in the GPU to apply for the OCAB storage space, and accordingly, the relevant resource manager acquires the allocation request from the target object, where the allocation request is configured to apply for the OCAB storage space. The OCAB storage space is typically on-chip buffer for storing attribute values of image vertex, and may be a part of L1 cache (level 1 cache).

In the above, the relevant resource manager may be a memory management unit (MMU) of the GPU or an equivalent mechanism. For example, the relevant resource manager may also be a shader group allocation manager, a shader group allocation controller or the like.

S2: verifying whether a remaining OCAB storage space is larger than or equal to the OCAB storage space applied for by the allocation request.

Upon acquisition of the allocation request from the target object, whether the remaining OCAB storage space is larger than or equal to the OCAB storage space applied for by the allocation request is verified. If the remaining OCAB storage space is larger than or equal to the OCAB storage space applied for by the allocation request, step S4 is executed; otherwise, if the remaining OCAB storage space is smaller than the OCAB storage space applied for by the allocation request, step S3 is executed.

S3: allocating the target object a GMAB storage space based on the allocation request.

If the remaining OCAB storage space is smaller than the OCAB storage space applied for by the allocation request, the target object is allocated the GMAB storage space based on the allocation request, where the access speed of the OCAB storage space is higher than or equal to the access speed of the GMAB storage space. When the target object is allocated the GMAB storage space, a size of the GMAB storage space allocated is consistent with that of the OCAB storage space applied for by the allocation request.

When the target object is allocated the GMAB storage space, different target objects are allocated dedicated storage spaces, thereby avoiding occurrence of a deadlock issue. Each target object is allocated a dedicated GMAB storage space, including a base address and a space size, both of which are configurable. When using a GMAB storage space, it is necessary to calculate an offset address of the GMAB, and an actual GMAB address is obtained by adding this offset address to corresponding base address, thereby achieving independent address control for each target object.

The GMAB storage space is other global storage space for replacing the OCAB storage space when the remaining OCAB space is insufficient. In the prior art, once the remaining OCAB space is insufficient, subsequent allocation requests are immediately blocked, which will cause the whole pipeline to be blocked, and consequently affecting overall calculation efficiency. However, in the present invention, by introducing the GMAB storage space, when the remaining OCAB space is insufficient, the GMAB storage space is utilized for buffer adjustment, thus reducing the allocation pipeline stalls, thereby improving the overall performance.

The GMAB storage space can cover multiple global storage spaces such as L1 cache, L2 cache (Level 2 cache), L3 cache (Level 3 cache), and off-chip storage. When the target object is allocated the GMAB storage space, the storage space with a higher access speed is allocated with priority, that is, allocation of the L1 cache is prioritized, and the L3 cache is allocated only when the storage spaces of the L1 cache and L2 cache are insufficient, so as to improve data access efficiency as much as possible.

In a possible embodiment, the GMAB storage space allocated to the target object includes an L1 cache. After allocating the target object the GMAB storage space based on the allocation request, the above method further includes: setting eviction priority of data in each cache line in the GMAB storage space allocated to the target object to be the lowest eviction priority. In the present invention, when accessing the GMAB storage space, a buffer control mechanism can be used. The buffer control mechanism controls in two aspects. One aspect is that a priority-based eviction algorithm is employed in an L1 cache, and each cache line is assigned with a different eviction priority, including evict_first, evict_normal and evict_last, where evict_first represents the highest eviction priority, evict_last represents the lowest eviction priority, and evict_normal represents an intermediate eviction priority. Both thresholds of evict_normal and evict_last can be configured, so as to achieve more flexible control. The other aspect is that priority is given to L1 cache when allocating the GMAB storage space, and it is set with the eviction priority evict_last, so as to reduce possibility of eviction, thus fully utilizing the L1 cache, minimizing data access latency for computing units, and enhancing overall performance.

When allocating the target object the GMAB storage space based on the allocation request, in a possible embodiment, the target object may be directly allocated the GMAB storage space based on the allocation request. In such embodiment, an allocable GMAB storage space can be set larger, so as to ensure that the allocable GMAB storage space is always larger than or equal to the OCAB storage space applied for by the allocation request.

In the present invention, the allocable GMAB storage space is larger than an allocable OCAB storage space, that is, the remaining GMAB storage space is larger than the remaining OCAB space, so that when the remaining OCAB space is insufficient, there is sufficient GMAB storage space for allocation, thus reducing allocation pipeline stalls.

S4: allocating the target object the OCAB storage space based on the allocation request.

If the remaining OCAB storage space is larger than or equal to the OCAB storage space applied for by the allocation request, the target object is allocated the OCAB storage space based on the allocation request. Herein, a size of the allocated OCAB storage space is consistent with that of the OCAB storage space applied for by the allocation request.

When allocating the target object the OCAB storage space, a virtual OCAB (VOCAB) address can be allocated first, where the significance of adopting the virtual address lies in enabling different target objects to utilize the same storage address through virtualization of the storage space, thereby improving utilization rate of storage resources. Afterwards, a physical OCAB (POCAB) address is allocated, and mapping from the VOCAB address to the POCAB address is established. The POCAB is shared by all target objects, and different target objects can share data stored in the GPU memory, thus reducing redundant storage and memory bandwidth consumption. Such allocation mode allows dynamic allocation of storage space, and can be adjusted at any time as required, thus improving the efficiency and flexibility of storage resource management, and avoiding wastes of storage resources.

In a possible embodiment, prior to S3, the above method further includes: verifying whether the remaining GMAB storage space is larger than or equal to the OCAB storage space applied for by the allocation request; if the remaining GMAB storage space is larger than or equal to the OCAB storage space applied for by the allocation request, executing S3: allocating the target object a GMAB storage space based on the allocation request; if the remaining GMAB storage space is smaller than the OCAB storage space applied for by the allocation request, suspending processing of the allocation request, and after the GMAB storage space is released and the remaining GMAB storage space is larger than or equal to the OCAB storage space applied for by the allocation request, allocating the GMAB storage space to the suspended allocation request. For ease of understanding the storage-space allocation method in this embodiment, description is made below with reference to FIG. 2. In the embodiment shown in FIG. 2, S23 of verifying whether the remaining GMAB storage space is larger than or equal to the OCAB storage space applied for by the allocation request, is added between S2 and S3 shown in FIG. 1; if yes, S23 is executed, and if no, S5 is executed: suspending processing of the allocation request.

In a possible embodiment, prior to S2, the above method further includes: verifying an allocation permission of the target object for the OCAB storage space, and determining that the target object possesses the allocation permission for the OCAB storage space. In such embodiment, only when it is determined that the target object possesses the allocation permission for the OCAB storage space, the step of verifying whether a remaining OCAB storage space is larger than or equal to the OCAB storage space applied for by the allocation request is executed.

In a possible embodiment, the above method further includes: if the target object lacks the allocation permission for the OCAB storage space, allocating the target object the GMAB storage space based on the allocation request.

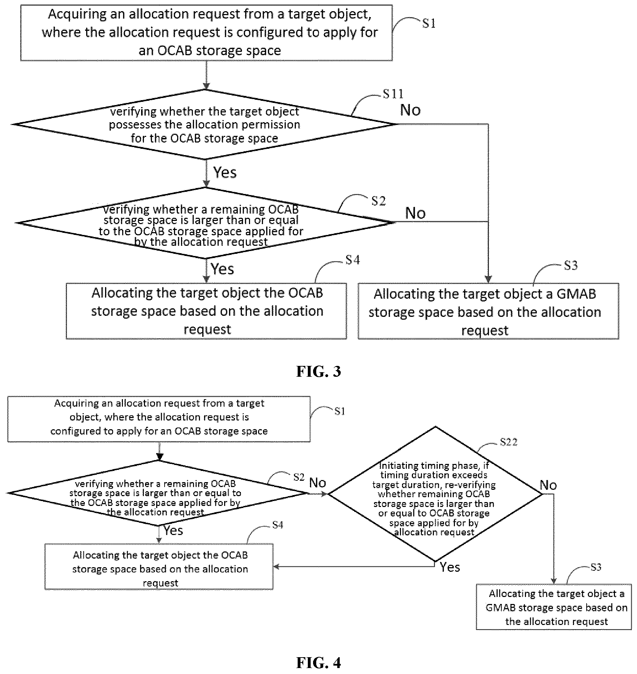

For ease of understanding the storage-space allocation method shown in the above embodiments, description is made below with reference to FIG. 3. In the embodiment shown in FIG. 3, step S11 is added between S1 and S2 shown in FIG. 1: verifying whether the target object possesses the allocation permission for the OCAB storage space, that is, verifying the allocation permission of the target object for the OCAB storage space, and when it is determined that the target object possesses the allocation permission for the OCAB storage space, S2 is executed; otherwise, when it is determined that the target object lacks the allocation permission for the OCAB storage space, S3 is executed.

When verifying the allocation permission of the target object for the OCAB storage space, in an embodiment, a verification process may include: performing at least one of the following verifications: verifying whether the OCAB storage space applied for by the allocation request exceeds a single maximum request limit; and verifying whether the currently used OCAB storage space when the target object applies for exceeds a maximum upper limit, where when each verification in the at least one verification returns a negative result, it is determined that the target object possesses the allocation permission for the OCAB storage space; otherwise, when any verification in the at least one verification returns a positive result, it is determined that the target object lacks the allocation permission for the OCAB storage space.

In a possible embodiment, the above two verifications may be both performed, that is, verifying whether the OCAB storage space applied for by the allocation request exceeds the single maximum request limit, and verifying whether the currently used OCAB storage space when the target object applies for exceeds the maximum upper limit. If the OCAB storage space applied for by the allocation request does not exceed the single maximum request limit, and the currently used OCAB storage space when the target object applies for does not exceed the maximum upper limit, it is determined that the target object possesses the allocation permission for the OCAB storage space; conversely, if the OCAB storage space applied for by the allocation request exceeds the single maximum request limit and/or the currently used OCAB storage space when the target object applies for exceeds the maximum upper limit, it is determined that the target object lacks the allocation permission for the OCAB storage space.

In the above, the currently used OCAB storage space when the target object applies for will change with the allocation and release of the OCAB storage space, where once the OCAB storage space is released, the currently used OCAB storage space will correspondingly decrease; and after the OCAB storage space is allocated to the target object, the currently used OCAB storage space will correspondingly increase.

In some embodiments, the above step of verifying the allocation permission of the target object for the OCAB storage space may also be called as performing a spill check on the OCAB storage space of the target object, that is, verification of the allocation permission for the OCAB storage space may be called as spill check on the OCAB storage space.

In a possible embodiment, prior to S3, the above method further includes: initiating a timing phase (which may also be called as triggering a timeout mechanism) if the remaining OCAB storage space is smaller than the OCAB storage space applied for by the allocation request; if a timing duration exceeds a target duration, re-verifying whether the remaining OCAB storage space is larger than or equal to the OCAB storage space applied for by the allocation request; and determining that the remaining OCAB storage space re-verified is still smaller than the OCAB storage space applied for by the allocation request. In such embodiment, if the remaining OCAB storage space is smaller than the OCAB storage space applied for by the allocation request, S3 is not immediately executed, but the timing phase is initiated, and once the timing duration exceeds the target duration, it is re-verified whether the remaining OCAB storage space is larger than or equal to the OCAB storage space applied for by the allocation request; and only when the remaining OCAB storage space re-verified is still smaller than the OCAB storage space applied for by the allocation request, S3 is executed.

In a possible embodiment, the above method further includes: if the remaining OCAB storage space re-verified is larger than or equal to the OCAB storage space applied for by the allocation request, allocating the target object the OCAB storage space based on the allocation request. When the remaining OCAB storage space is smaller than the OCAB storage space applied for by the allocation request, by waiting for a certain time, if, in the timing phase, there is a possibility that the previously allocated OCAB storage space is released, then after the release, the remaining OCAB storage space available for allocation may become larger than or equal to the OCAB storage space applied for by the allocation request, in which case the OCAB storage space may be immediately allocated to the target object, in this way, allocation of the OCAB storage space to the target object is prioritized. As the access speed of the OCAB storage space is higher than or equal to that of the GMAB storage space, the data access efficiency can be elevated as much as possible. Moreover, the target duration is configurable, and when the remaining OCAB storage space is still smaller than the OCAB storage space applied for by the allocation request after the target duration is exceeded, it is indicated that the OCAB storage space requested is indeed large and difficult to meet, then the GMAB storage space is used to replace the OCAB storage space, which can ensure unblocking of the whole pipeline, thereby further improving the performance.

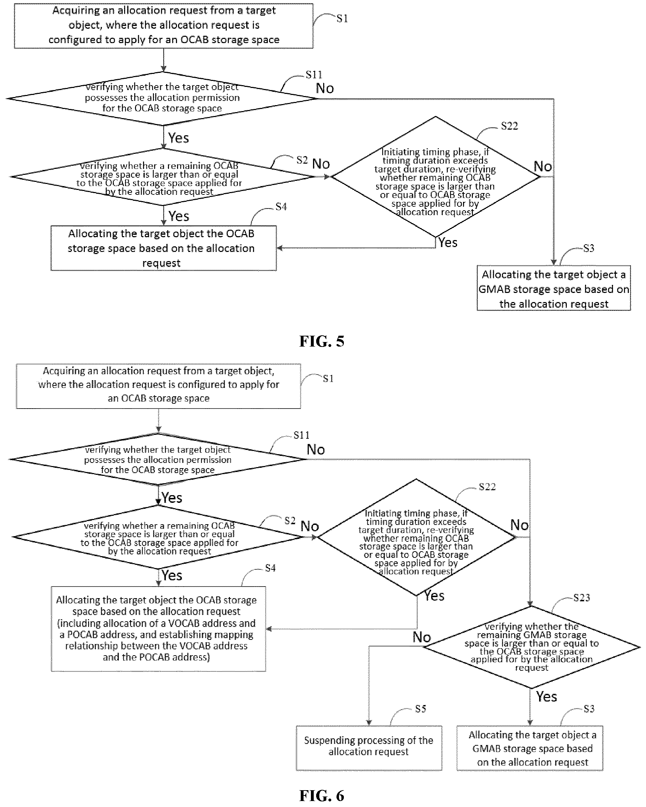

For ease of understanding the storage-space allocation method shown in the above embodiments, description is made below with reference to FIG. 4 and FIG. 5. In the embodiment shown in FIG. 4, step S22 is added between S2 and S3 shown in FIG. 1, and in the embodiment shown in FIG. 5, step S22 is added between S2 and S3 shown in FIG. 3. That is, if the remaining OCAB storage space is smaller than the OCAB storage space applied for by the allocation request, the timing phase is initiated; if a timing duration exceeds the target duration, whether the remaining OCAB storage space is larger than or equal to the OCAB storage space applied for by the allocation request is re-verified; if the remaining OCAB storage space re-verified is still smaller than the OCAB storage space applied for by the allocation request, S3 is executed; otherwise, if the remaining OCAB storage space re-verified is larger than or equal to the OCAB storage space applied for by the allocation request, S4 is executed.

With the timeout mechanism for the storage space proposed in the present invention, the more efficient L1 cache can be prioritized, thus reducing unnecessary use of global storage space. By making full use of the L1 cache, the delay of the computing units for acquiring data is smaller, and the overall performance is improved.

The above-mentioned maximum upper limit, single maximum request limit, and target duration can all be configured. Flexible spill check and flexible waiting time adjustment can be implemented through some configurable parameters. These parameters include threshold parameter of spill, client_throttle parameter and timeout parameter, and different target objects are dedicated with these three independent parameters.

In the above, the threshold parameter represents the single maximum request limit. When the OCAB storage space applied for by the allocation request exceeds the threshold parameter, the OCAB storage space is no longer used, and the GMAB storage space is directly allocated instead of the OCAB storage space.

The client_throttle parameter represents the maximum upper limit of the OCAB storage space available for the target object. If the currently used OCAB storage space when the target object applies for exceeds the client_throttle parameter, the OCAB storage space is no longer used, and instead the GMAB storage space is used to replace the OCAB storage space.

The timeout parameter represents the target duration of the timeout mechanism. If the spill check (also called as allocation permission verification) is passed, but the OCAB storage space requested exceeds the remaining OCAB storage space, the timeout mechanism is triggered instead of directly using the GMAB storage space. The timeout mechanism is implemented by means of one configurable parameter timeout. When the timeout mechanism is triggered, the timer is reset to zero and timing is initiated; and if the timer reaches timeout parameter, timeout is triggered, and whether the remaining OCAB storage space is larger than or equal to the OCAB storage space applied for by the allocation request is re-verified. The GMAB storage space is allocated if and only if the size of the OCAB storage space applied for when the timeout is triggered still exceeds the remaining OCAB storage space.

In a possible embodiment, a diagram of the above storage-space allocation method may be as shown in FIG. 6. Upon receipt of the allocation request from the target object, the spill check is performed first (S11), where if the spill check is passed, an OCAB space allocation is verified to determine whether there is sufficient OCAB space for allocation; if yes, the VOCAB address and POCAB address are allocated, and address mapping is completed; if no, the timeout mechanism is triggered, where the timeout mechanism is implemented by means of a configurable parameter timeout, and when the timeout mechanism is triggered, the timer is reset to zero and timing is initiated; and if the timer reaches timeout parameter, then the timeout is triggered, and whether the remaining OCAB storage space is larger than or equal to the OCAB storage space applied for by the allocation request is re-verified. The GMAB storage space is allocated if and only if the size of the OCAB storage space applied for when the timeout is triggered still exceeds the remaining OCAB storage space. When the spill check fails, the GMAB space allocation is verified, to determine whether there is sufficient GMAB space available for allocation, and if yes, the GMAB storage space is allocated instead of the OCAB storage space; and if no, resource verification fails, and the allocation request must be blocked.

It should be understood that the embodiment shown in FIG. 6 is only one of numerous embodiments of the present invention, and different parts of various embodiments may be combined with each other to form new embodiments. Those of ordinary skill in the art could obtain other relevant drawings according to these embodiments without paying out inventive efforts.

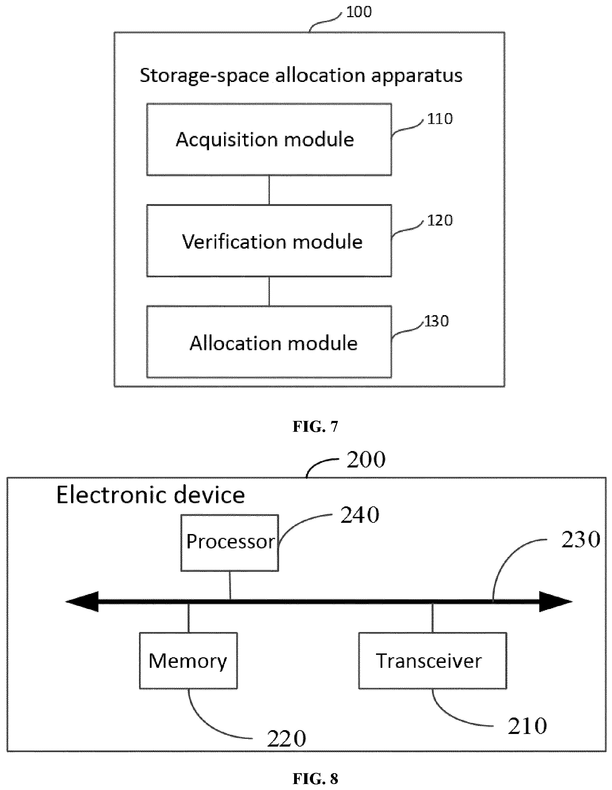

Embodiments of the present invention further provide a storage-space allocation apparatus 100. As shown in FIG. 7, the storage-space allocation apparatus 100 includes: an acquisition module 110, a verification module 120, and an allocation module 130. The storage-space allocation apparatus 100 provided in the present invention can run in a memory management unit of a GPU, a shader group allocation manager or a shader group allocation controller.

The acquisition module 110 is configured to acquire an allocation request from a target object, where the allocation request is configured to apply for an OCAB storage space.

The verification module 120 is configured to verify whether a remaining OCAB storage space is larger than or equal to the OCAB storage space applied for by the allocation request.

The allocation module 130 is configured to allocate, if the remaining OCAB storage space is smaller than the OCAB storage space applied for by the allocation request, the target object a GMAB storage space based on the allocation request, where the access speed of the OCAB storage space is higher than or equal to the access speed of the GMAB storage space.

In a possible embodiment, the verification module 120, prior to verifying whether a remaining OCAB storage space is larger than or equal to the OCAB storage space applied for by the allocation request, is further configured to verify an allocation permission of the target object for the OCAB storage space, and determine that the target object possesses the allocation permission for the OCAB storage space.

In a possible embodiment, the verification module 120 is configured to perform at least one of the following verifications: verifying whether the OCAB storage space applied for by the allocation request exceeds a single maximum request limit; and verifying whether the currently used OCAB storage space when the target object applies for exceeds the maximum upper limit, where when each verification in the at least one verification returns a negative result, it is determined that the target object possesses the allocation permission for the OCAB storage space.

In a possible embodiment, the allocation module 130 is further configured to allocate, if the target object lacks the allocation permission for the OCAB storage space, the target object the GMAB storage space based on the allocation request.

In a possible embodiment, prior to the allocation module 130 allocating the target object the GMAB storage space based on the allocation request, the verification module 120 is further configured to, if the remaining OCAB storage space is smaller than the OCAB storage space applied for by the allocation request, initiate a timing phase; if the timing duration exceeds a target duration, re-verify whether the remaining OCAB storage space is larger than or equal to the OCAB storage space applied for by the allocation request; and determine that the remaining OCAB storage space re-verified is still smaller than the OCAB storage space applied for by the allocation request.

In a possible embodiment, the allocation module 130 is further configured to, if the remaining OCAB storage space re-verified is larger than or equal to the OCAB storage space applied for by the allocation request, allocate the target object the OCAB storage space based on the allocation request.

In a possible embodiment, the allocation module 130 is further configured to, if the remaining OCAB storage space is larger than or equal to the OCAB storage space applied for by the allocation request, allocate the target object the OCAB storage space based on the allocation request.

In a possible embodiment, the verification module 120 is further configured to, prior to the allocation module 130 allocating the target object the GMAB storage space based on the allocation request, verify whether the remaining GMAB storage space is larger than or equal to the OCAB storage space applied for by the allocation request; and determine that the remaining GMAB storage space is larger than or equal to the OCAB storage space applied for by the allocation request.

In a possible embodiment, the GMAB storage space allocated to the target object includes L1 cache, and the allocation module 130 is further configured to set eviction priority of data in each cache line in the GMAB storage space allocated to the target object to be the lowest eviction priority.

As regards the storage-space allocation apparatus 100 provided in embodiments of the present invention, an implementation principle and technical effects produced thereby are the same as those in the preceding method embodiments. For the sake of concise description, contents not mentioned in the apparatus embodiments can be referred to corresponding contents in the preceding method embodiments.

As shown in FIG. 8, FIG. 8 shows a structural diagram of the electronic device 200 provided in embodiments of the present invention. The electronic device 200 includes: a transceiver 210, a memory 220, a communication bus 230 and a processor 240.

The transceiver 210, the memory 220, and the processor 240 are electrically connected to each other directly or indirectly to implement data transmission or interaction. For example, these components can be connected electrically via one or more communication buses 230 or signal lines. In the above, the transceiver 210 is configured to receive and send data. The memory 220 is configured to store computer programs, such as a software functional module shown in FIG. 7, namely, the storage-space allocation apparatus 100. The storage-space allocation apparatus 100 includes at least one software functional module that can be stored in the memory 220 in a form of software or firmware, or integrated in an operating system (OS) of the electronic device 200. The processor 240 is configured to execute executable modules stored in the memory 220, such as software functional modules or computer programs included in the storage-space allocation apparatus 100. For example, the processor 240 is configured to execute the above storage-space allocation method.

The memory 220 can be, but is not limited to, random access memory (RAM), read-only memory (ROM), programmable read-only memory (PROM), erasable programmable read-only memory (EPROM), electric erasable programmable read-only memory (EEPROM), and the like.

The processor 240 may be an integrated circuit chip that can process signals. The processor 240 may include a data processing core of a GPU (Graphics Processing Unit), a CPU (Central Processing Unit), an AI (Artificial Intelligence), an NPU (Neural network Processing Unit), an ISP (Image Signal Processor), a DPU (Display Processing Unit), a VPU (Video Processing Unit), a DSP (Digital Signal Processor), etc., or a processor chip applied to scenarios such as mass data operations. It can implement or perform each of the methods, steps and logical block diagrams disclosed in the embodiment of the present invention. Or the processor 240 can also be any conventional processor, and so on.

The above electronic device 200 herein includes, but is not limited to, mobile phone, tablet computer, notebook computer, computers, etc.

Embodiments of the present invention further provide a non-volatile computer-readable storage medium (hereinafter referred to as "storage medium" for short) that store a computer program. When the computer program is run by a computer, such as the above electronic device 200, the above storage-space allocation method is executed.

Embodiments of the present invention further provide a computer program product, where the computer program product includes a computer program, and when the computer program is run by the computer, the above storage-space allocation method is executed.

It should be noted that various embodiments in the present description are described in a progressive manner, each embodiment focuses on differences from others, and references can be made therebetween for the same or similar parts in various embodiments.

In the several embodiments provided in the present invention, it should be understood that the apparatus and method disclosed also may be implemented in other manners. The apparatus embodiments described above are merely illustrative. For example, the flowcharts and the block diagrams in the drawings show possible system structures, functions and operations of the apparatus, method and computer program products described in multiple embodiments of the present invention. In this regard, each block in the flowchart or block diagram may represent a module, part of program segment or code, the module, part of program segment or code include one or more executable instructions for implementing specified logical functions. It also should be noted that in some implementation modes as substitutions, the functions marked in the blocks also can take effect in an order different than that marked in the drawings. For example, two continuous blocks can be executed in parallel or in a reverse order, which depends on the function involved. It also should be noted that each block or combination of the blocks in the block diagram and/or the flowchart can be realized by a dedicated hardware-based system used to execute a specified function or action, or can be realized by a combination of dedicated hardware and computer instructions.

Besides, the various functional modules in various embodiments of the present invention can be integrated together to form one independent part, and it is also possible that the various modules exist independently, or that two or more modules are integrated to form one independent part.

The functionality, when implemented as a software functional module and sold or used as a stand-alone product, can be stored in a computer-readable storage medium. Based on such understanding, the technical solution of the present invention, the part that contributes to the prior art, or part of the technical solution can be embodied in form of a software product. The computer software product is stored in a computer-readable storage medium, including a number of instructions to cause a computer device (which may be a personal computer, a notebook computer, a server, an electronic device, or the like) to perform all or some of the steps of the method described in various embodiments of the present invention. The aforementioned computer-readable storage medium includes various media that can store program code, such as USB flash drives, mobile hard drives, read-only memory (ROM), random access memory (RAM), diskettes or CD-ROMs.

The above-mentioned are merely for specific embodiments of the present invention, but the scope of protection of the present invention is not limited thereto. Any person skilled in the art could easily envisage changes or substitutions within the technical scope disclosed in the present invention, all of which should be encompassed within the scope of protection of the present invention. Therefore, the scope of protection of the present invention should be determined by the scope of protection of the claims.

## Claims

1. A storage-space allocation method, **characterized by** comprising steps of:
acquiring an allocation request from a target object, wherein the allocation request is configured to apply for an OCAB storage space;
verifying whether a remaining OCAB storage space is larger than or equal to the OCAB storage space applied for by the allocation request; and
allocating, when the remaining OCAB storage space is smaller than the OCAB storage space applied for by the allocation request, the target object a GMAB storage space based on the allocation request, wherein the access speed of the OCAB storage space is higher than or equal to the access speed of the GMAB storage space.

2. The storage-space allocation method according to claim 1, prior to verifying whether a remaining OCAB storage space is larger than or equal to the OCAB storage space applied for by the allocation request, further comprising steps of:
verifying an allocation permission of the target object for the OCAB storage space; and
determining that the target object possesses the allocation permission for the OCAB storage space.

3. The storage-space allocation method according to claim 2, further comprising a step of:
when the target object lacks the allocation permission for the OCAB storage space, allocating the target object the GMAB storage space based on the allocation request.

4. The storage-space allocation method according to claim 2, wherein the step of verifying an allocation permission of the target object for the OCAB storage space comprises:
performing at least one of following verifications:
verifying whether the OCAB storage space applied for by the allocation request exceeds a single maximum request limit; and
verifying whether a currently used OCAB storage space when the target object applies for exceeds a maximum upper limit, wherein
when each verification in the at least one verification returns a negative result, it is determined that the target object possesses the allocation permission for the OCAB storage space.

5. The storage-space allocation method according to claim 1, prior to allocating the target object a GMAB storage space based on the allocation request, further comprising steps of:
when the remaining OCAB storage space is smaller than the OCAB storage space applied for by the allocation request, initiating a timing phase;
when a timing duration exceeds a target duration, re-verifying whether the remaining OCAB storage space is larger than or equal to the OCAB storage space applied for by the allocation request; and
determining that the remaining OCAB storage space re-verified is still smaller than the OCAB storage space applied for by the allocation request.

6. The storage-space allocation method according to claim 5, further comprising a step of:
when the remaining OCAB storage space re-verified is larger than or equal to the OCAB storage space applied for by the allocation request, allocating the target object the OCAB storage space based on the allocation request.

7. The storage-space allocation method according to claim 1, further comprising a step of:
when the remaining OCAB storage space is larger than or equal to the OCAB storage space applied for by the allocation request, allocating the target object the OCAB storage space based on the allocation request.

8. The storage-space allocation method according to any one of claims 1-7, prior to allocating the target object the GMAB storage space based on the allocation request, further comprising steps of:
verifying whether the remaining GMAB storage space is larger than or equal to the OCAB storage space applied for by the allocation request; and
determining that the remaining GMAB storage space is larger than or equal to the OCAB storage space applied for by the allocation request.

9. The storage-space allocation method according to any one of claims 1-7, wherein the GMAB storage space allocated to the target object comprises L1 cache; and after allocating the target object the GMAB storage space based on the allocation request, the method further comprises a step of:
setting eviction priority of data in each cache line in the GMAB storage space allocated to the target object to be a lowest eviction priority.

10. A storage-space allocation apparatus, **characterized by** comprising:
an acquisition module, configured to acquire an allocation request from a target object, wherein the allocation request is configured to apply for an OCAB storage space;
a verification module, configured to verify whether a remaining OCAB storage space is larger than or equal to the OCAB storage space applied for by the allocation request; and
an allocation module, configured to allocate, when the remaining OCAB storage space is smaller than the OCAB storage space applied for by the allocation request, the target object a GMAB storage space based on the allocation request, wherein the access speed of the OCAB storage space is higher than or equal to the access speed of the GMAB storage space.

11. An electronic device, **characterized by** comprising:
a memory and a processor, wherein the processor is connected to the memory;
the memory is configured to store a program; and
the processor is configured to call the program stored in the memory, so as to execute the storage-space allocation method according to any one of claims 1-9.

12. A computer-readable storage medium, **characterized in that** the computer-readable storage medium stores a computer program, and when the computer program is run by a computer, the storage-space allocation method according to any one of claims 1-9 is executed.

13. A computer program product, **characterized in that** the computer program product comprises a computer program, and when the computer program is run by a computer, the storage-space allocation method according to any one of claims 1-9 is executed.
